Europäisches Patentamt

European Patent Office

Office européen des brevets

(19)

(11) Publication number: **0 203 270**
**A2**

# (12) EUROPEAN PATENT APPLICATION

(21) Application number: **86102569.0**

(22) Date of filing: **27.02.86**

(51) Int. Cl.⁴: **H 02 M 3/337**

(30) Priority: **28.02.85 IT 4775285**

(43) Date of publication of application: **03.12.86**
**Bulletin 86/49**

(84) Designated Contracting States: **AT BE CH DE FR GB LI
NL SE**

(71) Applicant: **SELENIA SPAZIO S.p.A., via Pile 3,
I-67100 L'Aquila (IT)**

(72) Inventor: **Roccucci, Silvio, Largo Belloni 4, Roma (IT)**

(74) Representative: **Gustorf, Gerhard, Dipl.-Ing.,
Mühlenstrasse 1, D-8300 Landshut (DE)**

(54) **DC-DC converter comprising a PWM inverter producing a quasi-trapezoidal waveform, and a low losses rectifier to produce a DC output.**

⑤ Alternating current pulse width modulated inverter-converter having quasi-trapezoidal waveform, capable of high frequency (10 ÷ 30 kHz) inverter a.c. output rectifying diodes low loss energy transfer from primary source to d.c. output lines.

Due to its characteristics, it may be adopted for space as well as ground applications. Its uniqueness is given by the insertion within its converting circuit of a peculiar magnetic generator through which energy with square wave current and controlled aneptitude and duration, is transferred from the primary source to the inverter. This magnetic generator exploits the presence of paramite capacities of the inverter transformer or that of any other capacitive circuit suitably inserted, to achieve at a quasi-trapezoidal a.c. voltage at the inverter output.

## PATENTANWALT
## DIPL.-ING. GERHARD GUSTORF
EUROPEAN PATENT ATTORNEY

MÜHLENSTRASSE 1
D-8300 LANDSHUT

Telefon Büro:   08 71 / 8 93 71
            Privat:   08 71 / 2 57 19

0203270

1

PA 1 701 EP

SELENIA SPAZIO S.p.A.
Via Pile 3
L´Aquila (Italia)

JITLE MODIFIED
see front page

## Alternating current pulse-width-modulated inverter-converter

## Description

This invention, which is particularly innovative in the field of high voltage generators, regards an inverter-converter, which is pulse width modulated and has an a.c.

- 2 -

quasi-trapezoidal waveform, capable of feeding energy through
from primary source to d.c. output lines, at low losses
within the inverter high frequency (10 to 30 kHz) a.c. recti-
fying diodes.

Previous solutions usually relied upon Pulse width modulated
inverter converters which did not exploit devices meant
to provide an inverter quasi-trapezoidal  a.c. voltage, which
is the basic condition, together with the lead d.c. current
on-time and the type of filter used (in this case always
capacitive) required to achieve a considerable reduction
of losses within the rectifying diodes.

The main drawbacks  of such inverter-converters, are
the following:

- switching transistors not always operating within
their safety area during switching times;

- overload and short-circuit protection circuits con-
sisting of rather complex electronic circuits;

- rectified primary current waveform fed to a capacitive
load often very much distorted and, at times, having high
peaks;

- substantial high voltage rectifying diodes loss
during switching, with consequent lowaefficiency;

- thermal and technological difficult-to-solve problems
for the high voltage and power diodes.

All such inconveniences are solved or attenuated by
the invention.. presented and as can be found in the following, it also bears the following advantages:

- high efficiency

- output filter size reduction

- easily controllable peak current drawn upon equipment switch-on;

- power stage switching transistors well within their safety areas under all load conditions, including those related to accidental short circuits;

- high insensitivity to incapacitive filters present in the d.c. outputs, obtained through rectification.

The output a.c. voltage waveform, which is quasi-trapezoidal, reduced EMI disturbances and together with a current magnetic generator also reduced rectifying diode losses counder-ably during recovery time (both at low and high voltage). Such reduction which is largely independent of the inverter frequency range, simplifies thermal and technological problems of the high voltage power generators for space and ground applications.

It follows, therefore, that its fields of application are:

(A) The Space:

1) Electronic Power Conditioners, used to feed and control travelling wave tubes or klystions.

2) a.c. ebergy distribution within a satellite, in therrange from a few hundred watts to many kilowatts.

(b) Ground Applications:

3) high voltage geaerators in the range from a few hundred watts to 10 KW and more for radar applications;

4) high voltage generators for T WTs used for telecommunications.


The invention will now be described in an illustrative manner, but is not limited to their, with reference to the figures, schematics and tables attached, to then follow on, still based

on the figures provided, with a detailed description of its

operations.

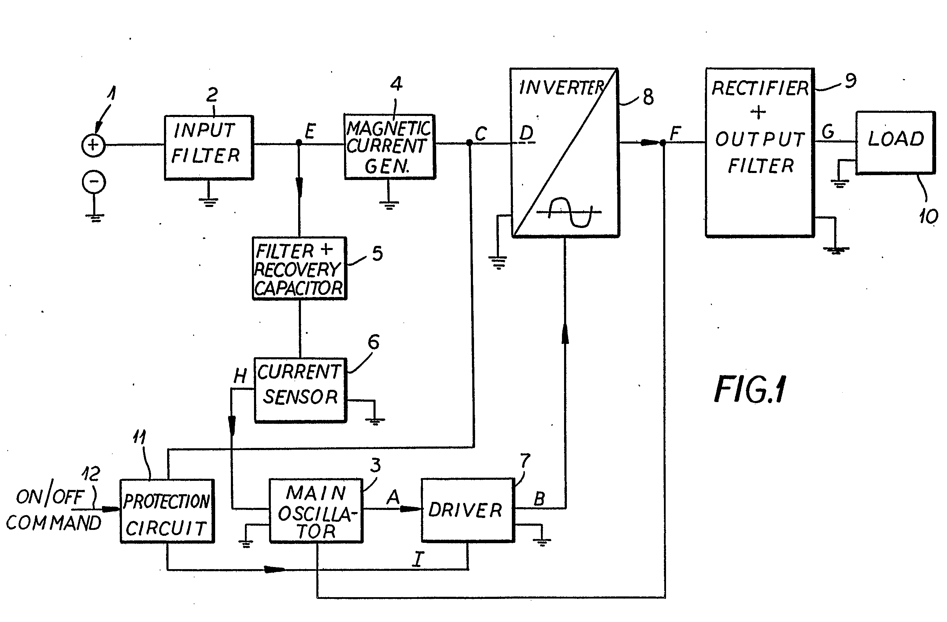

FIG. 1 shows the inverter-converter block diagram, which is the object of the present invention, in its general configuration, which is also its most significant.

Here:

1   is the primary voltage power source

2   is the unput filter

3   is the main oscillator and control

4   is the current magnetic generator

5   is the filter and recovery capacitor

6   is the current sensor

7   is the driver circuit

8   is the inverter

9   is the rectifying circuit and output filter

10   is the load

11   is the protection and command circuit

12 is the on-off command circuitry

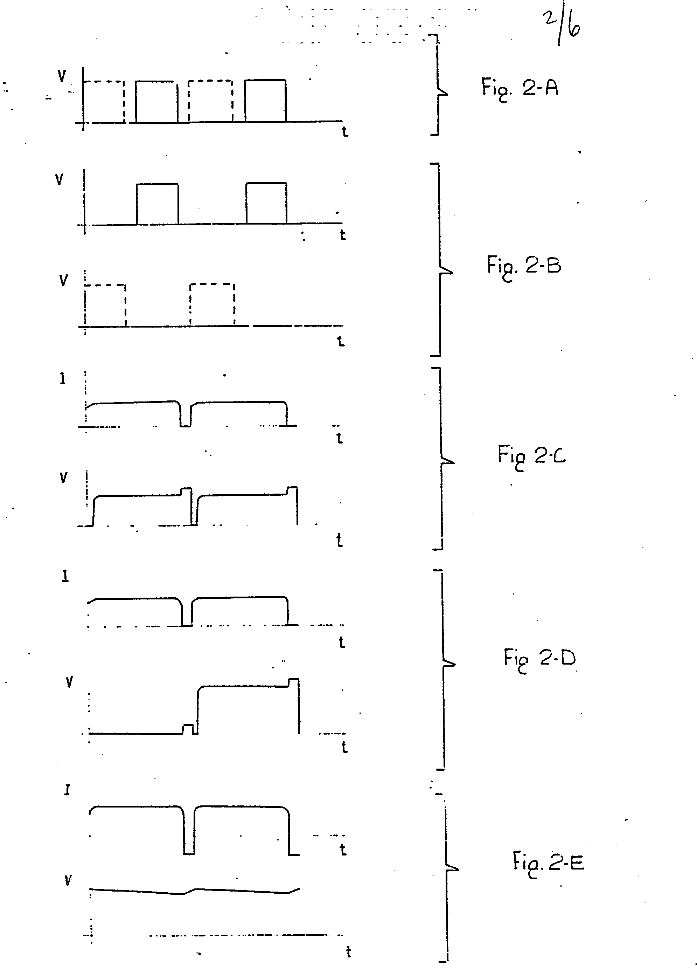

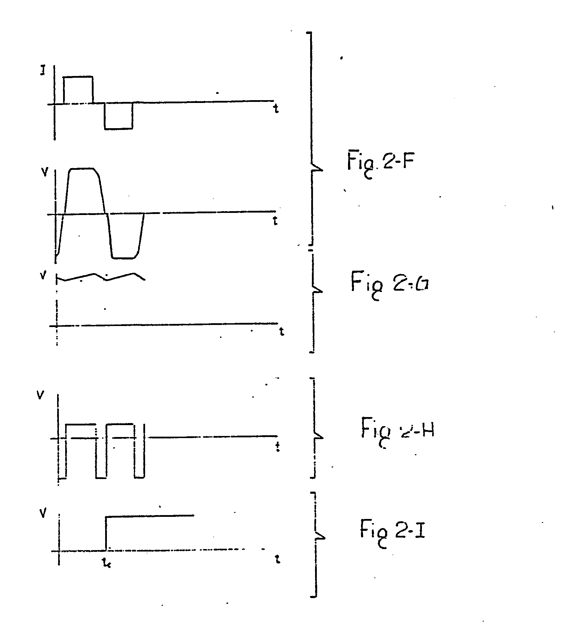

FIGURES 2A to 2I show the following waveforms:

2A   main oscillator output voltage waveforms

2B   inverter pilot signal waveforms

2C   inverter input voltage and current waveforms

2D   inverter input current waveform and collector to emitter inverter transistor voltage waveforms

2E   voltage and current waveform before magnetic current generator

2F   alternating current and voltage waveform at the inverter output

2G   D.C. output voltage waveform

2H   current sensor output voltage waveform

2I   protection and command circuitry output voltage waveform

FIGURE 3 shows the electrical schematic of the main oscillator with the control circuits and driver circuits 3 and 7 of FIGURE 1.

FIGURE 4 shows the electrical schematic of the current magnetic generator, the filter capacitor, the current sensor, the inverter, the rectifying circuit and output circuit shown in blocks 4, 5, 6, 8, 9, 10 of FIGURE 1.

Let us now proceed with the operations description with reference to the figures.

A d.c. primary source is connected to line 1 (FIGURE 1) and hence to input filter 2.

Such filters may be conventional and have the task to reduce a.c. currents rejected toward the primary source and noide coming from source to inverter.

A main oscillator, which may use an I.C. such as SG 1524 3, sends a pulse width square wave (FIG. 2A) to pilot circuit 7 and from here (FIG. 2-B) to inverter 8.

Power is supplied to the inverter by means of supply line 1 through filter 2 and magnetic generator 4. This generator is meant to keep constant the current sent to the inverter for the time in which the chopper transistors (static switches) of the inverter are conducting. On time is variable and normally never exceeds 80% of each semi period. During off-time the magnetic current generator, through a secondary winding and a diode recovers through filter and recovery capacitor 5, the energy saved during inverter transistor on-time by keeping the primary reported current constant.

Current sensor 6 sends a signal (FIG. 2-H) to the main oscillator and control 3 which is proportional to the a.c. current passing through filter and recovery capacitor 5.

The value of their a.c. current is tied to that of the current supplied to the converter and when this exceeds a preset threshhold, it acts upon control 3 by limiting the current drawn by the inverter. This device acts upon switch on, giving way to a soft start current-peak-free through the inverter transistors, and also during accidental short circuits between inverter 8 output lines.

Inverter 8 driven by the signals produced by the driver, provides an a.c. voltage at its output which is rectified and filtered by the rectifying and filter circuit 9 and here applied to load 10.

The inverter a.c. output is connected to the main ascillator and control 3 so as to achieve a.c. regulation and varying load 10 and supply voltage 1 .

Protection and command circuits 11 can block inverter 8 in the event of overload oe short circuit and also switch the invrrter on or off by means of commands coming from command line 12.

Under all conditions (block switch-on/off) protection and command signals 11 act permanently on drivers 7 (FIGURE 2-I).

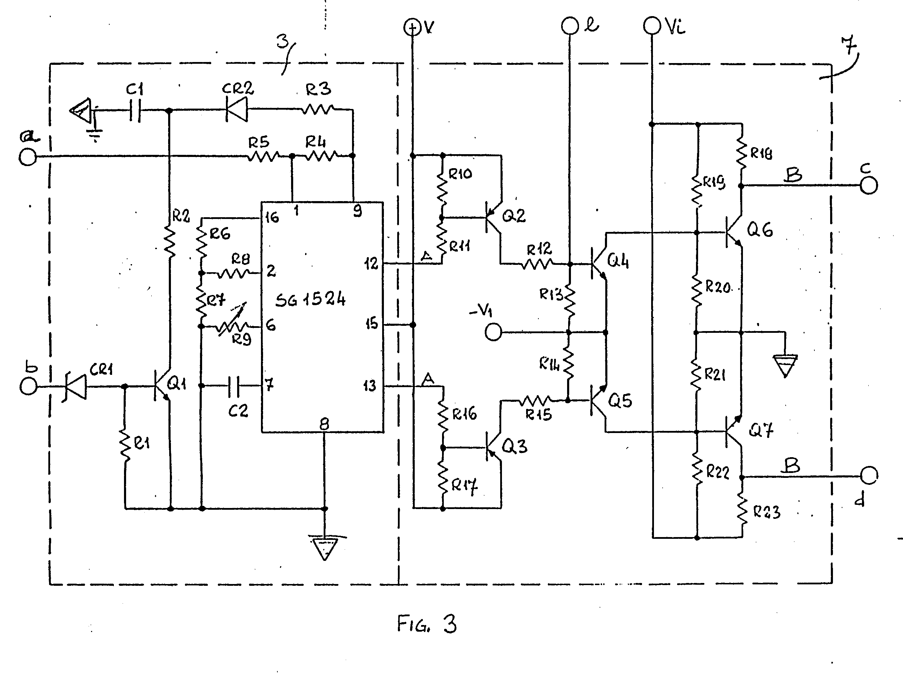

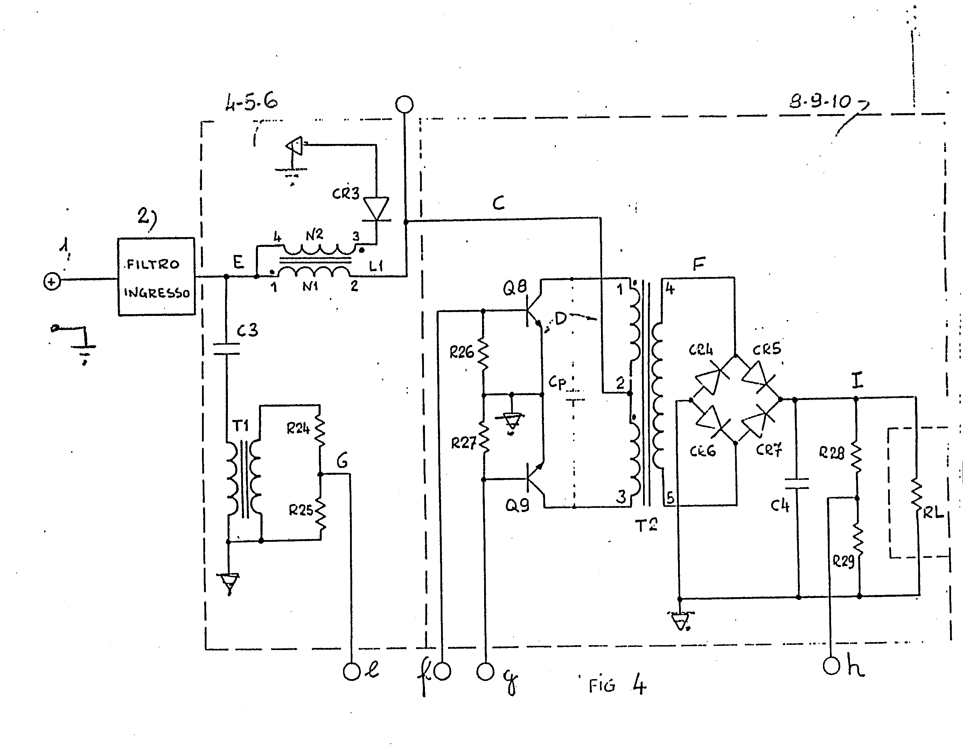

FIGURES 3 and 4 show in detail the electronic circuits of the inverter-converter, which can easily be understood through a detailed analysis of waveforms given in FIGURES 2-A, 2-B, 2-C, 2-D, 2-E, 2-F, 2-G, 2-H, 2-I.

FIGURE 3 shows:

The main oscillator and control circuit 3, consisting of:

in its preferred form, I C  SG 1524 (Silicon General Texas Instruments., etc.) soft load circuit and current limitor $(C_1 - CR_2 - R_3 - CR_1 - R_1 - R_2 - Q_1)$ i feedback circuit $(R_4 - R_5)$ to regulate gain;

resistors $R_6$-$R_7$-$R_8$ to apply reference voltage to the error amplifier inside I.C. SG 1524;

a time constant $R_9C_2$ to set the oscillator frequency inside I.C. SG 1524.

Driving circuit 7, which by means of transistors $Q_{2-3-4-5-6-7}$ suitably driven, adapts signal impedence (FIG. 2-A) at the I.C. outputto that of the output signal required (terminals)c-d; FIGURE 2-B) to drive the power transistors of the inverter.

FIGURE 4 shows:

The current magnetic generator 4, consistingof an inductance L, having a secondary winding and diode $CR_3$ for energy recovery when the inverter transistors are interdicted.

Filter and recovery capacitor $C_3$, meant to filter the voltage before inductance $L_1$ and to draw the current which is sent to it when the magnetic current generator recovers.

Current sensor $T_1$-$R_{24}$-$R_{25}$ which through terminal (e) which applied to control 3 terminal (b) an a.c. voltage (FIGURE 2-H) proportional to current drawn by inverter 8 so as to limit this to a pre-fixed value.

Power inverter 8, which through transistors $Q_8$-$Q_9$ and transformer $T_2$, transfers ac energy to rectifying and filter circuits 9 and from these to load resistor RL10

Resistors $R_{28}$-$R_{29}$, which through terminal (h) apply to terminal (a) of FIGURE 3 a feedback voltage to regulate the voltage present on load 10.

FIGURE 2-A shows the output voltage waveforms of main oscillator 3: these are square and have a variable duration by means of the error amplifier and the logic circuits present in IC SG 1524. This voltage is applied to driver 7 which acts as an impedance maleber, and the voltage at terminals c-d output is applied to inverter (D) through terminals f-g. The inveretr picks up energy from the primary source 1 through input filter 2 and magnetic gen- erator 4. Figure 2-C shows the waveforms (current and voltage) at the inverter input ; FIGURE 2-D shows the inverter input current waveforms and those of transistors $Q_8 Q_9$ of inverter 8 collector to emitter voltages.

An analysis of these waveforms shows that the input current to inverter 8 is constant when either $Q_8$ or $Q_9$ are on and is zero when they are off.

During recovery time, $L_1$ recovers energy toward filter capacitor $5C_3$ and this can be seen in FIGURE 2E which gives the current and voltage waveforms before $L_1$.

During recovery, the current changes direction and moves totally into $C_3$; when either $Q_8$ or $Q_9$ are on,, $C_3$ contributes in providing ebergy to the inverter in FIGURE 2-E.

FIGURE 2-C highlights that during recovery; there is an overvoltage at the inverter input, which has an amplitude equal to line voltage 1 times ratio N2/N1 FIGURE 4 of $L_1$. This overvolt- age is instantaneously fed or bias to $Q_8$-$Q_9$ (FIG. 2-D) collectors.

When $Q_8$ and $Q_9$ are off, transformer $T_2$ does not transfer energy because the output load voltage obtained by means of rec- tifiers $CR_{4-5-6-7}$ and filter capacitor $C_4$ is at a level (FIGURE 2-G) which is higher than the a.c. voltage (FIGURE 2-F) maintained by paramite capacitors $C_p$ (particularly high in high voltage transformers which offer a high transformer ratio) or by other suitable capacitive circuits to be used when there are low voltage loads with low transformer ratios.

In fact, as soon as $Q_8$-$Q_9$ are both off, the output d.c voltage, thanks to capacitor $C_4$, FIGURE 4, decays much more slowly than the a.c. voltage applied to rectifying diodes; it follows that through correct dimensioning of $C_4$ (FIGURE 4) rectifying diodes are interdicted with a voltage drop equal to about 10% that of the output with a reduction of overall losses amounting to bbout 80% of those which would be obtained with a squarewwave or with an inductive filter of the output.

FIGURE 2-F shows the voltage and current a.c. output by the inverter and the quasi trapezoidal waveform of the a.c. voltage resulting from $Q_8$ - $Q_9$ FIG. 2-D collector voltage waveforms. The current, transferred to diodes $CR_{4-5-6-7}$ lasts only the time $Q_8$ or $Q_9$ are ON.

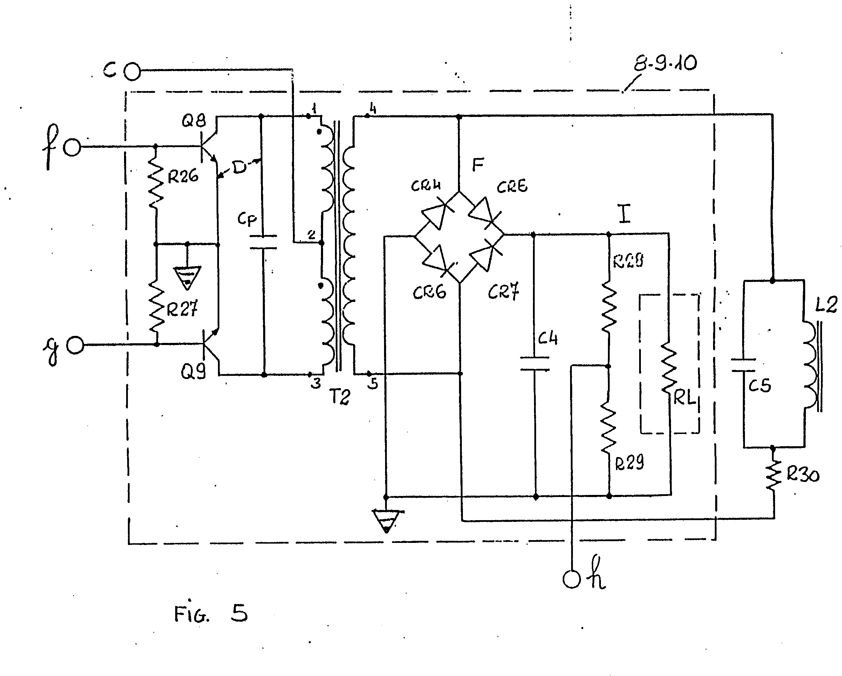

While during recovery time (500 msec) of $CR_{4-5-6-7}$ the current in such diodes is provided by paramite capacitor $C_p$ or by other suitable auxiliary capacitor circuit to be applied to the output a.c. line is shown in FIGURE 5 and consists of a parallel resonant circuit L(2-C5) and of a resistor $R_{30}$ which acts as a limitor and damper.

## Claims

1. Pulse Width Modulated Inverter-Converter, including a main oscillator and control circuits 3 which generates a variable duration square wave, associated with an impedence matching and driving circuit which drives the real power inverter, all in a substantially conventional configuration, characterized by the fact that such a power inverter is fed through a non-linear inductive element, or current magnetic generator 4, which sends constant current energy to the power transformer and to the load.

2. Inverter-converter as per claim 1, characterized by the fact that such non-linear conductive element or current magnetic generator includes a series inductance at the power inverter side this inductance is connected to a non-linear semi-conductor device (diode) which operates as an energy recovery device towards the filter and recovery capacitor (C3, FIGURE 4)

3. Inverter-converter as per claims 1-2, characterized by the fact that such non-linear inductive element or magnetic-current generator, includes a double winding inductor ($L_1$; FIG. 4) having its first winding in series with input filter (2, FIG. 4) and one supply side of the power inverter ($Q_8$; $Q_9$, FIG. 4) and a second winding having opposite polarity, connected between this filter (2. FIG. 4) and the cathode of a diode which has its anode connected to the ground.

4. Inverter-converter as per claims above, which is characterized by the fact that the paramite capacitors or the primary of power transformer (T2, FIGURE 4) are controlled so that a quasi-trapezoidal wavefomr is obtained at the output applied to the rectifier (CR$_{4,5,6,7}$, FIG. 4).

5. Inverter-converter as per claims 1 to 4, which is characterized by the inclusion of a parallel resonant circuit with dampening resistor (L2, C5, R30, FIGURE 5) on such power transformer (T2, FIGURE 5).

6. Inverter-converter as per claims 1,2,3,4,5, which provides at the power transformer (T2 of FIGURE 4) output an a.c. voltage having a quasi-trapezoidal waveform.

7. Inverter-converter as per claims 1,2,3,4,5,6 which may be used as a generator for a.c power distribution to more d.c. loads through rectification and filtering of the a.c. voltage.

FIG.1

0203270

2/6

Fig. 2-A

Fig. 2-B

Fig 2-C

Fig 2-D

Fig. 2-E

0203270

3/6

Fig. 2-F

Fig 2-G

Fig 2-H

Fig 2-I

FIG. 3

0203270

4/6

FIG 4

Fig. 5